# EUROPÄISCHE PATENTANMELDUNG

(11) **EP 1 992 857 A2**
(43) Veröffentlichungstag der Anmeldung: **19.11.2008**
(21) Anmeldenummer: 07121265.8
(22) Anmeldetag: 22.11.2007
(51) Int. Cl.: F16L 23/14

(54) **Kuppelbarer Lüftungskanal**

(30) Priorität: 19.04.2007 AT 2502007 U
(71) Anmelder: Troges Gesellschaft für Trocknungs- und Wärmetechnik m. b. H., 1220 Wien (AT)
(72) Erfinder: Braunegg, Heinz, 1170, Wien (AT)
(74) Vertreter: KLIMENT & HENHAPEL

(57) **Zusammenfassung**

Lüftungskanal (1), umfassend mehrere Seitenwände (2) samt integral mit diesen gefertigten Flanschelementen (3), welche einer Kupplung mit weiteren Flanschelementen (3') eines zweiten Lüftungskanals (1') dienen, wobei an den Flanschelementen (3) ein verschraubbares Winkelprofil (4) anbringbar ist, wobei ein außerhalb des Lüftungskanalquerschnitts (8) angeordnetes Halteelement (5) für das Winkelprofil (4) vorgesehen ist. Das Flanschelement (3) weist einen vorzugsweise um 90° von der Seitenwand (2) abgewinkelten Basisabschnitt (11) und einen dazu vorzugsweise ebenfalls um 90° abgewinkelten Trägerabschnitt (12) auf, wobei das Halteelement (5) einen am Basisabschnitt (11) des Flanschelementes (3) anliegenden ersten Endabschnitt (17) sowie einen um den Trägerabschnitt (12) des Flanschelementes (3) in Richtung der Lüftungskanalachse (9) umgebogenen und vorzugsweise das Winkelprofil (4) und/oder den Basisabschnitt (11) des Flanschelementes (3) kontaktierenden zweiten Endabschnitt (18) aufweist. Auf diese Weise werden eine optimale Dichtheit sowie eine gesteigerte Stabilität der miteinander verbundenen Lüftungskanäle (1, 1') ermöglicht.

## Beschreibung

Die Erfindung bezieht sich auf einen Lüftungskanal, umfassend mehrere, einen rechteckigen oder polygonalen Lüftungskanalquerschnitt umschließende Seitenwände, welche Seitenwände jeweils mit in eine von der Lüftungskanalachse abgewandte Richtung abstehenden Flanschelementen versehen sind, welche als integraler Teil der Seitenwände gefertigt sind und einer Kupplung mit weiteren Flanschelementen eines zweiten Lüftungskanals dienen, wobei an den Flanschelementen ein Winkelprofil anbringbar ist, welches zwei Flanschelemente des Lüftungskanals im Bereich eines Eckstoßes zwischen zwei Seitenwänden miteinander verbindet, wobei das Winkelprofil mit einem korrespondierenden weiteren Winkelprofil des zweiten Lüftungskanals verbindbar, vorzugsweise verschraubbar ist, wobei ein außerhalb des Lüftungskanalquerschnitts angeordnetes Halteelement vorgesehen ist, welches das Winkelprofil in seiner Montagelage am Flanschelement hält und wobei das Flanschelement einen vorzugsweise um 90° von der Seitenwand abgewinkelten Basisabschnitt und einen dazu vorzugsweise ebenfalls um 90° abgewinkelten und somit parallel zur Seitenwand verlaufenden Trägerabschnitt aufweist, an welchem Trägerabschnitt das Halteelement in Montagelage zumindest abschnittsweise anliegt, gemäß dem Oberbegriff des Anspruchs 1.

Derartige Lüftungskanäle dienen als Verrohrung von Klima- bzw. Heiz-, Kühl- oder Lüftungsanlagen und sind dazu bestimmt, einen Durchfluss von Fluiden - zumeist Luft - zu ermöglichen. Die Luft kann hierbei technisch aufbereitet sein und einen beliebig hohen Feuchtigkeitsanteil sowie allfällige Additive beinhalten.

Gattungsgemäße Lüftungskanäle bestehen zumeist aus verzinktem Blech, Niro oder Aluminium und werden als vorgefertigte Elemente geliefert, welche am jeweiligen Montageort aneinandergefügt werden, um gemeinsam einen Lüftungsschacht beliebiger Länge zu konstituieren. Die Lüftungskanäle sind hierbei in Montagelage z.B. mittels Aufhängewinkeln oder Schellen gehalten und an der Decke eines Raumes befestigt.

Üblicherweise besitzen Lüftungskanäle mehrere im Wesentlichen ebene Seitenwände, welche gemeinsam einen quadratischen, rechteckigen oder polygonalen Lüftungskanalquerschnitt konstituieren. Um zwei Lüftungskanäle miteinander zu verbinden, sind diese an ihren offenen Stirnseiten jeweils mit Flanschelementen bestückt, welche mit korrespondierenden weiteren Flanschelementen eines gegenüberliegenden Lüftungskanals kuppelbar sind. Hierbei ist auf jede Seitenwand ein als Flanschelement dienendes, zumeist L-förmiges Hohlkammerprofil aufgesteckt bzw. aufgeschweißt, welches in eine von der Lüftungskanalachse abgewandte Richtung von der Seitenwand absteht.

Das Hohlkammerprofil der Flanschelmente bietet eine Aufnahme für die Schenkel eines Winkelprofils, welches zwei Flanschelemente zweier winkelig zueinander angeordneter Seitenwände eines Lüftungskanals miteinander verbindet. Der Längsverlauf der Flanschelemente wird also im Bereich eines Eckstoßes zwischen zwei Lüftungskanal-Seitenwänden quasi fortgesetzt, um den gesamten Lüftungskanalquerschnitt abdichtend zu umschließen. Im Falle zweier quadratischer bzw. rechteckiger Lüftungskanäle wird also jedes Lüftungskanalende bzw. jede Lüftungskanalstirnseite mit vier Winkelprofilen bestückt, sodass im gekuppelten Zustand der Lüftungskanäle jeweils ein Paar an Winkelprofilen zueinander weist, um anschließend miteinander verschraubt zu werden. Zu diesem Zwecke weisen die Winkelprofile in einem Eckbereich, welcher in Montagelage frei liegt bzw. nicht im Hohlkammerprofil der Flanschelemente versenkt ist, jeweils eine Bohrung auf, durch welche ein Schraubelement hindurchgeführt und anschließend mittels einer Schraubenmutter fixiert wird. Vor dem Zusammenführen und dem Verschrauben der beiden Lüftungskanäle wird an deren zueinander weisenden Flanschelementen üblicherweise eine Dichtungsbahn angebracht.

Als nachteilig bei derartigen, z.B. aus der DE 7508978 U bekannten Lüftungskanälen erweist sich der Umstand, dass im Kontaktbereich zwischen den Seitenwänden und den daran aufgesteckten oder punktgeschweißten Holkammer-Flanschelementen keine vollkommene Dichtheit gewährleistet ist und daher Leckverluste auftreten. Als nachteilig erweist sich weiters, dass die zum Lüftungskanalquerschnitt weisenden Innenseiten der Seitenwände nicht glatt ausgestaltet sind, sondern zufolge des die Stirnseiten der Seitenwände umgreifenden Flanschelemente-Profils einen Angriffspunkt für Ablagerungen bieten. Derartige Ablagerungen sind in hygienischer Hinsicht als problematisch anzusehen.

Es existieren daher weitere Lüftungskanal-Systeme, bei welchen die Flanschelemente der Lüftungskanäle einheitlich mit deren Seitenwänden gefertigt sind. Zu diesem Zweck finden Spezialvorrichtungen Einsatz, mittels welchen die Seitenwände jeweils nach außen bzw. in eine von der Lüftungskanalachse abgewandte Richtung aufgewalzt bzw. umgebördelt werden. Auf diese Weise kann eine im Wesentlichen glatte Innenseite des Lüftungskanals erzielt werden. Zur Verbindung zweier derart gefertigter Lüftungskanäle werden diese in eine hinsichtlich ihrer Längsachse fluchtende Position gebracht und die nun stirnseitig aneinander liegenden, optional mit einer Dichtungsbahn versehenen Flanschelemente mittels eines leistenförmigen Treibprofils zusammengeklemmt. Die beiden Lüftungskanäle sind danach in einer gewünschten Montageposition relativ zueinander fixiert.

In speziellen Anwendungsfällen bzw. bei groß dimensionierten Lüftungskanalquerschnitten kann eine solche Ausführungsart jedoch eine mangelnde Stabilität aufweisen. Da zwischen zwei aufgewalzten bzw. umgebördelten Flanschelementen eines Lüftungskanals jeweils eine Lücke besteht, kann des Weiteren keine sichere Abdichtung der Lüftungskanal-Eckstöße gewährleistet werden. Im Bereich der miteinander gekuppelten Flanschelemente zweier Lüftungskanäle muss daher ein möglicher Leckverlust in Kauf genommen werden.

Aus der EP 0 143 150 A1 ist ein Lüftungskanal bekannt, dessen Flanschelemente einstückig mit den Seitenwänden gefertigt sind, wobei ein schienenförmiges Halteelement vorgesehen ist, welches außerhalb des Lüftungskanalquerschnitts angeordnet ist und ein Winkelprofil am Flanschelement hält. Das Flanschelement ist hierbei zwei Mal um 90° umgewinkelt, weist also einen um 90° von der Seitenwand abgewinkelten Basisabschnitt und einen dazu ebenfalls um 90° abgewinkelten und somit parallel zur Seitenwand verlaufenden Trägerabschnitt auf, an welchem das Halteelement anliegt. Das Halteelement umschlingt das Winkelprofil an seiner gesamten dem Flanschelement zugewandten Stirnseite und umklammert das Winkelprofil mit zwei nasenförmigen Sickenabschnitten an der dem Flanschelement abgewandten Stirnseite des Winkelprofils.

Ein derartiges Haltesystem weist den Nachteil auf, dass sich im peripheren Bereich zwischen zwei gekuppelten Flanschelementen eine Lücke ergibt, welche das Eindringen von Feuchtigkeit in den Verbindungsbereich zwischen zwei Lüftungskanälen und somit Korrosionsgefahr bedingt. Des Weiteren beansprucht das Halteelement gemäß der EP 0 143 150 A1 einen hohen Material- und Fertigungsaufwand.
Da an gattungsgemäße Lüftungskanäle gegenwärtig erhöhte Anforderungen hinsichtlich Dichtheit gestellt werden, kann eine mangelhafte Abdichtung der Lüftungskanäle in vielen Anwendungsfällen nicht toleriert werden. Insbesondere ist bei derartigen Lüftungskanälen eine zuverlässige Abdichtung der Lüftungskanal-Eckstöße, also im Bereich der zwischen zwei aufgewalzten bzw. umgebördelten Flanschelementen eines Lüftungskanals bestehenden Lücke gewünscht, um Leckverluste zu verhindern. Auch bei groß dimensionierten Lüftungskanalquerschnitten ist eine hohe Stabilität miteinander gekuppelter Lüftungskanäle gefordert.

Es ist daher das Ziel der vorliegenden Erfindung, einen an einen weiteren Lüftungskanal kuppelbaren Lüftungskanal bereitzustellen, welcher sich durch erhöhte Dichtheit und Stabilität bei gleichzeitig möglichst glatter Ausführung der Innenseite und somit einer Wahrung optimaler Hygiene des Lüftungsschachtes auszeichnet.

Erfindungsgemäß werden diese Ziele durch einen Lüftungskanal mit den kennzeichnenden Merkmalen des Anspruchs 1 gelöst.

Ein gattungsmäßiger Lüftungskanal, dessen Flanschelemente als integraler Teil der Seitenwände gefertigt sind, weist hierbei ein außerhalb des Lüftungskanalquerschnitts angeordnetes Halteelement auf, welches das Winkelprofil in seiner Montagelage am Flanschelement hält. Das Flanschelement weist einen vorzugsweise um 90° von der Seitenwand abgewinkelten Basisabschnitt und einen dazu vorzugsweise ebenfalls um 90° abgewinkelten und somit parallel zur Seitenwand verlaufenden Trägerabschnitt auf, an welchem Trägerabschnitt das Halteelement in Montagelage zumindest abschnittsweise anliegt.

Erfindungsgemäß weist das Halteelement einen am Basisabschnitt des Flanschelementes zumindest abschnittsweise anliegenden ersten Endabschnitt sowie einen um den Trägerabschnitt des Flanschelementes in Richtung der Lüftungskanalachse umgebogenen bzw. den Trägerabschnitt umrundenden zweiten Endabschnitt auf.

Auf diese Weise kann eine optimale Abdichtung des Verbindungsbereichs zweier Lüftungskanäle realisiert werden.

Der zweite Endabschnitt des Halteelementes kann das Winkelprofil und/oder den Basisabschnitt des Flanschelementes in Montagelage kontaktieren, es kann jedoch auch ein Spiel zwischen jenem und dem Winkelprofil bzw. dem Flanschelemente-Basisabschnitt bestehen. Durch eine derartige J-Form des Halteelementes wird ein zuverlässiger Halt ebendieses am Flanschelement sowie eine sichere Halterung für das Winkelprofil ermöglicht. Des Weiteren wird die Stabilität des Flanschelementes gegenüber Biegung und Torsion stark gesteigert.

Die Winkelprofile sind mittels des Halteelementes sicher in einer ihnen zugeordneten Position im Bereich der Seitenwände-Eckstöße eines Lüftungskanals gehalten, sodass ein Herausfallen bzw. Herauskippen der Winkelprofile aus dieser Montagelage nicht mehr möglich und zwei in der beschriebenen Weise mit Winkelprofilen und Halteelementen bestückte Lüftungskanäle zuverlässig gekuppelt bzw. im Bereich der Winkelprofile miteinander verschraubt werden können. Da der Eckbereich der Winkelprofile die "Lücke" zwischen zwei benachbarten Flanschelementen eines Lüftungskanals ausfüllt bzw. den stirnseitigen Eckstoß zwischen zwei Seitenwänden umkleidet, kann auch dieser hinsichtlich eines Luftaustritts kritische Bereich der Lüftungskanäle mit einem Dichtelement bestückt und zuverlässig abgedichtet werden. Bei gleichzeitiger im Wesentlichen glatter und somit nicht verschmutzungsanfälliger Ausführung der Lüftungskanal-Innenseite wird daher ein sicheres Abdichten der Lüftungskanal- Stirnseiten bzw. der zugeordneten, einheitlich mit den Seitenwänden ausgeführten Flanschelemente ermöglicht. Gleichzeitig ergibt sich durch die Vorsehung des erfindungsgemäßen Halteelementes an jedem der Flanschelemente eine erhöhte Stabilität der Lüftungskanäle, sodass der Lüftungskanal fortan einer erhöhten Biege- und Torsionsbeanspruchung standhalten kann.

Indem das Flanschelement einen vorzugsweise um 90° von der Seitenwand abgewinkelten Basisabschnitt und einen dazu vorzugsweise ebenfalls um 90° abgewinkelten und somit parallel zur Seitenwand verlaufenden Trägerabschnitt aufweist, an welchem Trägerabschnitt das Halteelement in Montagelage zumindest abschnittsweise anliegt, erfolgt eine optimale Versteifung der Seitenwände bzw. des Lüftungskanals, insbesondere dann, wenn zufolge der kennzeichnenden Merkmale des Anspruchs 4 vorgesehen ist, dass das Halteelement in Montagelage über annähernd die gesamte Seitenlänge der Seitenwand verläuft.

Um eine ideale Abdichtung des Verbindungsbereichs zwischen zwei Lüftungskanälen zu erzielen, ist es gemäß den kennzeichnenden Merkmalen des Anspruchs 2 vorgesehen, dass die Flanschelemente sowie die Winkelprofile zweier Lüftungskanäle mittels eines vorzugsweise als selbstklebendes Dichtungsband ausgeführten Dichtelementes gegeneinander abgedichtet sind.

Um eine besonders stabile und kompakte Bauweise der Flanschelemente-Verbindung zu ermöglichen, ist es gemäß den kennzeichnenden Merkmalen des Anspruchs 3 vorgesehen, dass die ersten Endabschnitte der Halteelemente sich in Montagelage zweier Lüftungskanäle flächig kontaktieren und das Dichtungsband bzw. Dichtelement in jenem dem Lüftungskanalquerschnitt benachbarten Bereich der Basisabschnitte der Flanschelemente angeordnet ist, welcher nicht von den ersten Endabschnitten kontaktiert wird.

Gemäß den kennzeichnenden Merkmalen des Anspruchs 5 weist das Winkelprofil einen Anschlagabschnitt auf, welcher von einem Endbereich des Halteelementes kontaktierbar ist und welcher das Halteelement in Montagelage gegen ein Verschieben am Flanschelement sichert.

Um ein einfaches Anbringen des Halteelementes am jeweiligen Flanschelement zu ermöglichen, ist es gemäß den kennzeichnenden Merkmalen des Anspruchs 6 vorgesehen, dass das Halteelement entlang des Längsverlaufs des Flanschelementes auf dieses aufschiebbar ist.

In einer alternativen Ausführungsform gemäß den kennzeichnenden Merkmalen des Anspruchs 7 ist es jedoch auch möglich, dass das Halteelement quer zum Längsverlauf des Flanschelementes auf diesem positionierbar und auf dem Flanschelement und/oder dem Winkelprofil verrastbar ist. Auf diese Weise wird eine besonders schnelle Montage der Halteelemente ermöglicht.

In einer bevorzugten Ausführungsform gemäß den kennzeichnenden Merkmalen des Anspruchs 8 ist das Winkelprofil in einem Eckbereich mit einem langlochförmigen Durchbruch zur Aufnahme eines Schraubelementes versehen. Durch eine langlochförmige Ausführung des Winkelprofil-Durchbruchs ist es möglich, einen abgeflachten Fixierabschnitt des Schraubelementes in den langlochförmigen Durchbruch hineinzuführen, wobei eine Breite des Fixierabschnitts im Wesentlichen einer lichten Weite des langlochförmigen Durchbruchs entspricht. Solcherart wird eine Verdrehung des Schraubelementes bei Aufsatz und Verschraubung mit einer korrespondierenden Schraubenmutter von der jeweils anderen Seite des Flanschelementes verhindert und es bedarf keines Haltewerkzeuges, um das Schraubelement während seiner Montage in Position zu halten. Beim Schraubelement handelt es sich vorzugsweise um eine Torbandschraube.

Die Erfindung wird nun anhand eines Aufrührungsbeispiels näher erläutert. Dabei zeigt:
- Fig.1: eine schematische Darstellung zweier erfindungsgemäß miteinander gekuppelter Lüftungskanäle in Schrägansicht
- Fig.2: einen erfindungsgemäßen Lüftungskanal in Frontansicht
- Fig.3: eine perspektivische Darstellung eines Eckstoßes eines erfindungsgemäßen Lüftungskanals
- Fig.4: einen Eckstoß eines erfindungsgemäßen Lüftungskanals gemäß Blickrichtung "C" aus Fig.1
- Fig.5: eine Detaildarstellung eines im Eckstoß gemäß Fig.3 anbringbaren Winkelprofils (Draufsicht)
- Fig.5a: eine Detaildarstellung eines im Eckstoß gemäß Fig.3 anbringbaren Winkelprofils (Seitenansicht)
- Fig.6: eine Detaildarstellung einer erfindungsgemäßen Lüftungskanal-Verbindung gemäß Blickrichtung "D" aus Fig.3
- Fig.7: eine Detaildarstellung einer erfindungsgemäßen Lüftungskanal-Verbindung gemäß Schnittführung A-A aus Fig.2 bzw. Fig.3
- Fig.8: eine Detaildarstellung des Querschnitts eines erfindungsgemäßen Halteelementes

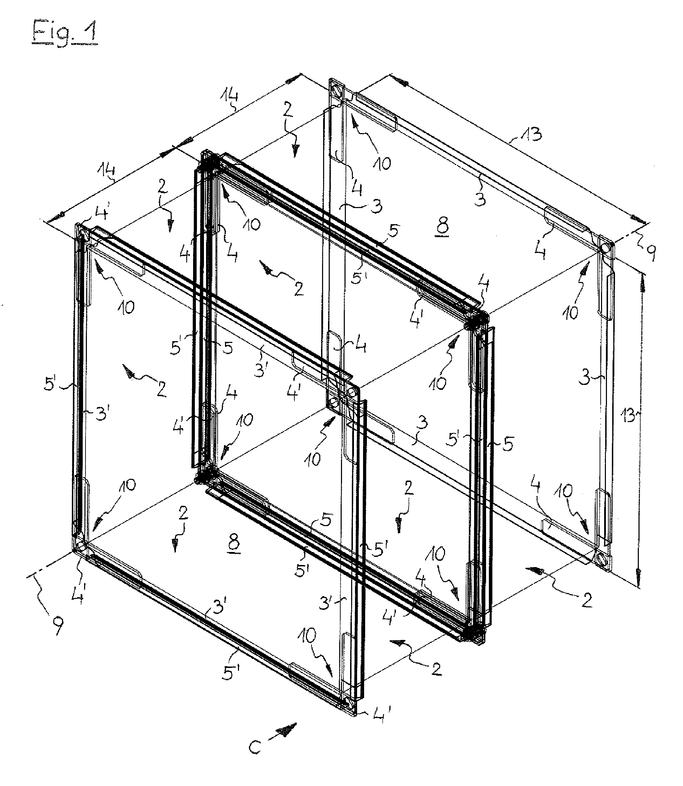

Fig.1 zeigt zwei erfindungsgemäße Lüftungskanäle 1, 1', welche sich bereits in einem miteinander gekuppelten Zustand befinden. Im vorliegenden Ausführungsbeispiel sind die Lüftungskanäle 1, 1' quadratisch ausgeführt und weisen eine definierte Seitenlänge 13 sowie eine gewünschte Korpuslänge 14 auf, deren Größe je nach Einsatzgebiet beliebig variiert werden kann. Die Lüftungskanäle 1, 1' können beispielsweise aus verzinktem Feinblech, Niro-, Aluminium- oder pulverbeschichtetem Blech gefertigt sein.

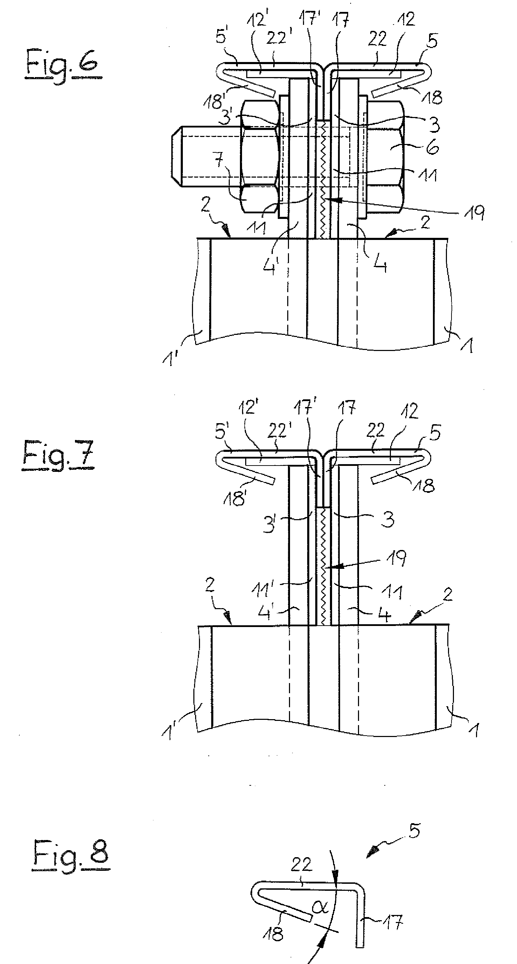

Der Lüftungskanal 1 wird von vier ineinander übergehenden Seitenwänden 2 konstituiert, wobei die einen Lüftungskanalquerschnitt 8 umschließenden Seitenwände 2, so wie aus Fig.6 näher ersichtlich, jeweils mit Flanschelementen 3 versehen sind, welche einer Kupplung mit korrespondierenden weiteren Flanschelementen 3' des zweiten Lüftungskanals 1' dienen. Selbstverständlich können der Lüftungskanal 1 bzw. der Lüftungskanalquerschnitt 8 auch rechteckig oder polygonal ausgeführt sein.

Die Flanschelemente 3, 3' sind jeweils integraler Bestandteil der Seitenwände 2 und sind von diesen umgebogen bzw. umgebördelt, sodass die Flanschelemente 3, 3' nun gemäß Fig.6 in eine von der Lüftungskanalachse 9 abgewandte Richtung von den Seitenwänden 2 abstehen. Hierbei weisen die Flanschelemente 3, 3' jeweils einen um 90° von der Seitenwand 2 abgewinkelten Basisabschnitt 11, 11' und einen dazu ebenfalls um etwa 90° abgewinkelten und somit parallel zur Seitenwand 2 verlaufenden Trägerabschnitt 12, 12' auf.

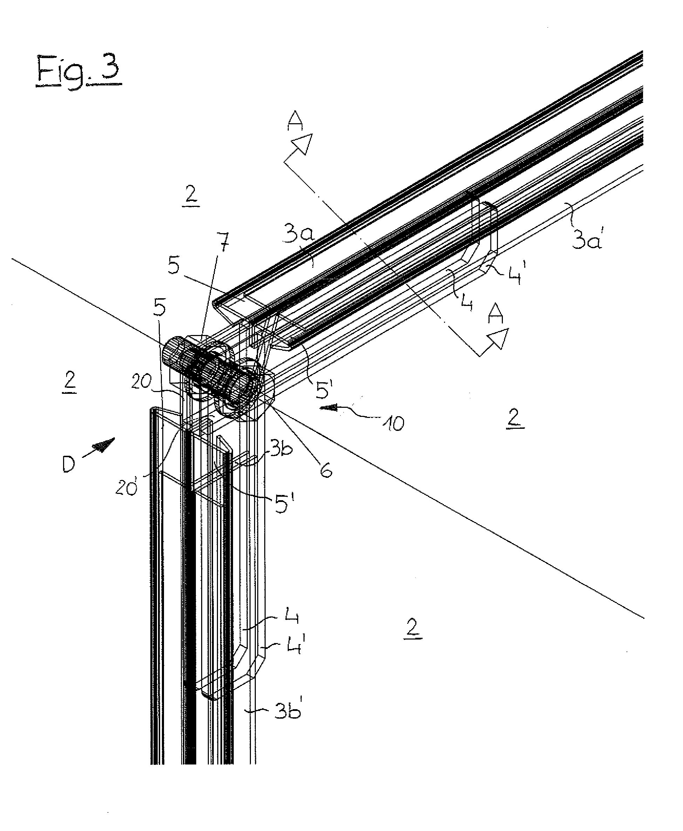

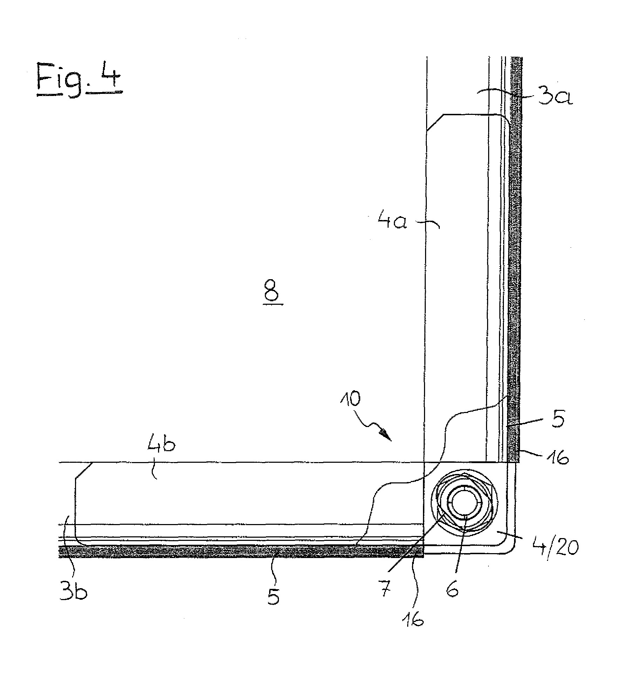

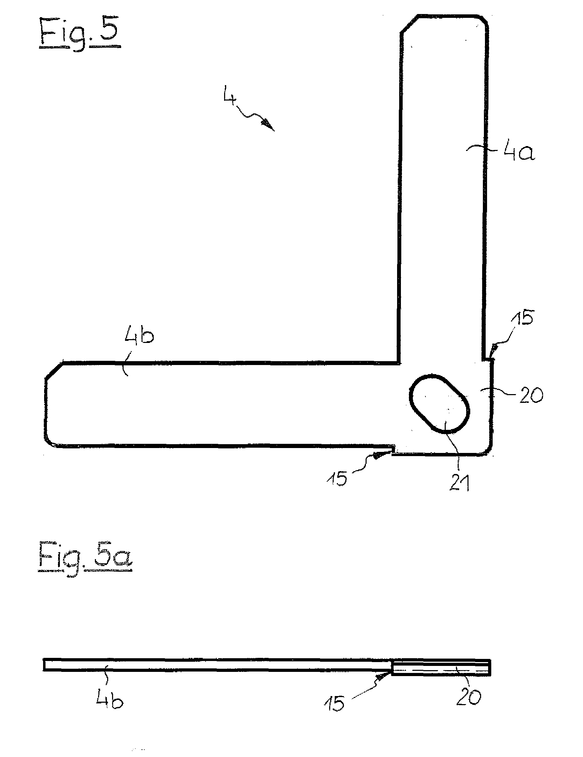

Im Bereich der Eckstöße 10 der Lüftungskanäle 1, 1' werden nun aus Fig.5 näher ersichtliche Winkelprofile 4 an den Flanschelementen 3, 3' positioniert. Ein Winkelprofil 4 weist zwei zur Anlage an den Flanschelementen 3, 3' bestimmte Schenkel 4a, 4b auf und bildet mit einem Eckbereich 20 jeweils den Übergang zwischen zwei benachbarten Flanschelementen 3a, 3b eines Lüftungskanals 1,1' (siehe Fig.3 und 4). Das Winkelprofil 4 ist in seinem Eckbereich 20 des Weiteren mit einem Durchbruch 21 bzw. einer Bohrung versehen, welche zur Aufnahme eines Schraubelementes 6 dient.

Nachdem die Winkelprofile 4, 4' an den Flanschelementen 3, 3' positioniert wurden, werden jene in erfindungsgemäßer Weise mit Halteelementen 5, 5' gemäß der in Fig.6 gezeigten Anordnung fixiert. Das erfindungsgemäße Halteelement 5, 5' besitzt einen am Basisabschnitt 11, 11' des Flanschelementes 3, 3' zumindest abschnittsweise anliegenden ersten Endabschnitt 17, 17' sowie einen um den Trägerabschnitt 12, 12' des Flanschelementes 3, 3' in Richtung der Lüftungskanalachse 9 herumgeführten zweiten Endabschnitt 18, 18' (siehe auch Fig.8). Der zweite Endabschnitt 18, 18' kann das Winkelprofil 4, 4' sowie eventuell auch den Basisabschnitt 11, 11' des Flanschelementes 3, 3' in Montagelage kontaktieren bzw. klemmen, ebenso kann jedoch auch ein geeignetes Spiel zwischen dem zweiten Endabschnitt 18, 18' und dem Winkelprofil 4, 4' bzw. dem Flanschelemente-Basisabschnitt 11, 11' bestehen bleiben.

Gegebenenfalls kann das Halteelement 5 nach dessen Anbringen am Flanschelement 3, 3' bzw. am Winkelprofil 4, 4' an ausgewählten Stellen z.B. mittels einer Handzange noch zusätzlich zusammengedrückt werden, um eine Fixierung der Winkelprofile 4, 4' in deren gewünschter Montagelage sicherzustellen. So ist es etwa denkbar, dass die gemäß Fig.7 in Montageposition vom Winkelprofil 4, 4' geringfügig distanzierten zweiten Endabschnitte 18, 18' des Halteelementes 5 direkt am Winkelprofil 4, 4' anliegen und dieses dadurch zuverlässig festhalten bzw. gegen den Basisabschnitt 11, 11' des Flanschelementes 3, 3' drücken.

Beim Halteelement 5 handelt es sich in einer bevorzugten Ausführungsform um ein annähernd die gesamte Seitenlänge 13 der Seitenwand 2 bzw. der Flanschelemente 3, 3' abdeckendes und diese somit beträchtlich stabilisierendes Bauteil mit einem im Wesentlichen J-förmigen Querschnitt (siehe Fig.8).

Der zweite Endabschnitt 18, 18' des Halteelementes 5 verläuft hierbei unter einem spitzen Winkel α zu einem in Montagelage am Trägerabschnitt 12, 12' des Flanschelementes 3, 3' anliegenden mittleren Abschnitt 22 des Halteelementes 5, wobei der Winkel α vorzugsweise 19° beträgt.

Wesentlich bei der Anordnung des Halteelementes 5, 5' ist es, dass dieses zwecks Gewährleistung einer glatten Innenseite der Lüftungskanäle 1, 1' nicht in den Lüftungskanalquerschnitt 8 hineinragt, was auf das vorliegende Ausführungsbeispiel bezogen bedeutet, dass insbesondere der am Basisabschnitt 11, 11' des Flanschelementes 3, 3' anliegende erste Endabschnitt 17, 17' des Halteelementes 5, 5' nicht in den Lüftungskanalquerschnitt 8 hineinragen darf.

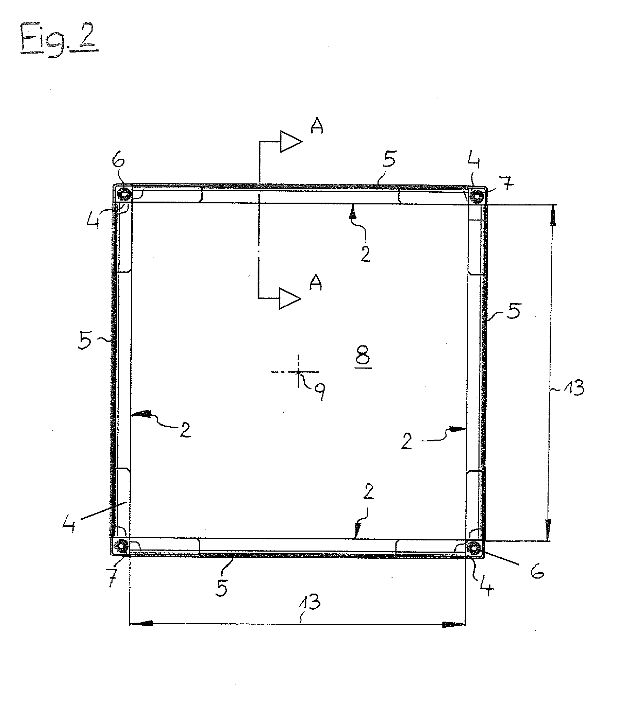

Um das Halteelement 5, 5' am jeweiligen Flanschelement 3, 3' bzw. am Winkelprofil 4, 4' anzubringen, kann das Halteelement 5, 5' etwa entlang des Längsverlaufs des Flanschelementes 3, 3' bzw. entlang der in Fig.2 eingezeichneten Seitenlänge 13 auf das Flanschelement 3, 3' aufgeschoben werden.

In einer alternativen Ausführungsform ist es jedoch auch möglich, dass das Halteelement 5, 5' quer zum Längsverlauf des Flanschelementes 3, 3' auf dieses aufsteckbar und auf dem Flanschelement 3, 3' und/oder dem Winkelprofil 4, 4' verrastbar ist.

In Fig.5 ist weiters ersichtlich, dass das Winkelprofil 4 im Eckbereich 20 mit einem Anschlagabschnitt 15 versehen ist, welcher über die gewöhnliche Breite der Winkelprofil-Schenkel 4a, 4b etwas hinausragt. Dieser Anschlagabschnitt 15 bildet ein Widerlager für einen Endbereich 16 des Halteelementes 5, sodass das Halteelement 5 in Montagelage gegen ein Verschieben in Längsrichtung des Flanschelementes 3 gesichert ist (siehe auch Fig.4)

Wie aus den bisherigen Schilderungen hervorgeht, besteht zwischen Winkelprofil 4 und Halteelement 5 also ein wechselseitiges Sicherungsverhältnis: Das am Flanschelement 3 aufgesteckte Halteelement 5 sichert das Winkelprofil 4 gegen ein axiales Umkippen, während das Winkelprofil 4 ein die Seitenlänge 13 der jeweils zugeordneten Seitenwand 2 überschreitendes Längsverschieben des Halteelementes 5 verhindert.

Bevor die in beschriebener Weise vorbereiteten erfindungsgemäßen Lüftungskanäle 1, 1' miteinander verschraubt werden, wird entlang des den Lüftungskanalquerschnitt 8 umgebenden Verlaufs der Flanschelemente 3, 3' und der Winkelprofile 4, 4' ein Dichtelement 19 angebracht. Beim Dichtelement 19 kann es sich um ein selbstklebendes Dichtungsband, eine Gummibahn oder auch um eine viskose Klebemasse handeln. Vorzugsweise besteht das Dichtelement 19 aus Zellpolyäthylen und besitzt eine Schichtdicke von ca. 4mm.

Wie in Fig.6 ersichtlich, erfolgt in Montagelage der Lüftungskanäle 1, 1' ein flächiges Kontaktieren der ersten Endabschnitte 17, 17' der Halteelemente 5, 5', wobei das Dichtelement bzw. Dichtungsband 19 in jenem dem Lüftungskanalquerschnitt 8 benachbarten Bereich der Flanschelemente-Basisabschnitte 11, 11' angeordnet ist, welcher nicht von den ersten Endabschnitten 17, 17' der Halteelemente 5, 5' kontaktiert wird. Das Dichtelement bzw. Dichtungsband 19 kann entweder zweischichtig (so dargestellt) oder auch einschichtig zwischen den Flanschelementen 3, 3' bzw. zwischen den Eckbereichen 20 der Winkelprofile 4, 4' angeordnet werden.

Es versteht sich, dass das Dichtelement bzw. Dichtungsband 19 während der Montage sorgfältig angebracht werden muss, um den gesamten Lüftungskanalquerschnitt 8 abdichtend zu umschließen.

Nachdem nun sowohl der erste Lüftungskanal 1 als auch der zweite Lüftungskanal 1' jeweils mit vier Winkelprofilen 4, 4' und vier an die Flanschelemente 3, 3' angepassten Halteelementen 5, 5' bestückt wurde, können die beiden Lüftungskanäle 1, 1' zueinander geführt und jeweils an den Winkelprofilen 4, 4' miteinander verschraubt werden. Zu diesem Zweck wird ein mit allfälligen Sicherungselementen versehenes Schraubelement 6 durch den langlochförmigen Durchbruch 21 des Winkelprofils 4, 4' geführt und auf der Seite des jeweils gegenüberliegenden Winkelprofils 4, 4' mit einer Schraubenmutter 7 verschraubt.

Das Schraubelement 6 weist in einer bevorzugten Ausführungsform einen zu seinem Schraubenkopf benachbarten bzw. als Schraubenkopf ausgeführten Fixierabschnitt mit abgeflachten Seitenflächen auf (siehe Fig.4) Dieser Fixierabschnitt ist in den langlochförmigen Durchbruch 21 des Winkelprofils 4, 4' hineinführbar, wobei die beiden abgeflachten Seitenflächen des Fixierabschnitts unter Vorsehung eines mehr oder weniger großen Spiels an den Längsseiten des langlochförmigen Durchbruch 21 anliegen. Die lichte Weite des langlochförmigen Durchbruchs 21 entspricht also im Wesentlichen einer zwischen den abgeflachten Seitenflächen gemessenen Breite des Fixierabschnitts. Solcherart wird eine Verdrehung des Schraubelementes 6 bei Aufsatz und Verschraubung mit einer korrespondierenden Schraubenmutter 7 von der jeweils anderen Seite des Flanschelementes 3, 3' verhindert und es bedarf keines Haltewerkzeuges bzw. keines zusätzlichen Gabelschlüssels, um das Schraubelement 6 während der Montage der Lüftungskanäle 1, 1' zu halten. Beim Schraubelement 6 handelt es sich vorzugsweise um eine handelsübliche Torbandschraube, sodass eine kostengünstige Herstellung der Schraubverbindung ermöglicht wird.

Es sei angemerkt, dass die Verbindung der Winkelprofile 4, 4' anstelle einer Schraubverbindung auch auf andere Weise, z.B. mittels einer Nietenverbindung denkbar ist. Jedenfalls werden durch das Befestigen bzw. Verschrauben der gegenüberliegenden, jeweils dem ersten und dem zweiten Lüftungskanal 1, 1' zugeordneten Winkelprofile 4, 4' auch die an den Basisabschnitten 11, 11' der Flanschelemente 3, 3' anliegenden ersten Endabschnitte 17, 17' der Halteelemente 5,5' aneinandergepresst und das Dichtelement bzw. Dichtungsband 19 entsprechend komprimiert, sodass der gesamte Lüftungskanalquerschnitt 8 abdichtend umschlossen und ein Austreten von Raumluft bzw. von Fluiden im Verbindungsbereich zweier Lüftungskanäle 1, 1' sicher verhindert ist.

Für den Fall, dass der Lüftungskanalquerschnitt 8 bzw. die Seitenlänge 13 der Seitenwände 2 sehr groß dimensioniert wurden (z.B. bei Seitenlängen 13 > 2m) und die Verschraubung der Winkelprofile 4, 4' in den Eckstößen 10 der Lüftungskanäle 1, 1' nicht ausreicht, um einen ausreichenden Anpressdruck und somit die Dichtheit zwischen gegenüberliegenden Flanschelementen 3, 3' bzw. Haltelementen 5, 5' zu gewährleisten, können im mittleren Bereich der Seitenwand Seitenlänge 13 noch zusätzliche (nicht dargestellte) Fixier- bzw. Verschraubungselemente vorgesehen sein, welche die Flanschelemente 3, 3' bzw. die Haltelemente 5,5' in jenem Bereich aneinanderdrücken.

## Patentansprüche

1. Lüftungskanal (1), umfassend mehrere, einen rechteckigen oder polygonalen Lüftungskanalquerschnitt (8) umschließende Seitenwände (2), welche Seitenwände (2) jeweils mit in eine von der Lüftungskanalachse (9) abgewandte Richtung abstehenden Flanschelementen (3) versehen sind, welche als integraler Teil der Seitenwände (2) gefertigt sind und einer Kupplung mit weiteren Flanschelementen (3') eines zweiten Lüftungskanals (1') dienen, wobei an den Flanschelementen (3) ein Winkelprofil (4) anbringbar ist, welches zwei Flanschelemente (3a, 3b) des Lüftungskanals (1) im Bereich eines Eckstoßes (10) zwischen zwei Seitenwänden (2) miteinander verbindet, wobei das Winkelprofil (4) mit einem korrespondierenden weiteren Winkelprofil (4') des zweiten Lüftungskanals (1') verbindbar, vorzugsweise verschraubbar ist, wobei ein außerhalb des Lüftungskanalquerschnitts (8) angeordnetes Halteelement (5) vorgesehen ist, welches das Winkelprofil (4) in seiner Montagelage am Flanschelement (3) hält und wobei das Flanschelement (3) einen vorzugsweise um 90° von der Seitenwand (2) abgewinkelten Basisabschnitt (11) und einen dazu vorzugsweise ebenfalls um 90° abgewinkelten und somit parallel zur Seitenwand (2) verlaufenden Trägerabschnitt (12) aufweist, an welchem Trägerabschnitt (12) das Halteelement (5) in Montagelage zumindest abschnittsweise anliegt, **dadurch gekennzeichnet, dass** das Halteelement (5) einen am Basisabschnitt (11) des Flanschelementes (3) zumindest abschnittsweise anliegenden ersten Endabschnitt (17) sowie einen um den Trägerabschnitt (12) des Flanschelementes (3) in Richtung der Lüftungskanalachse (9) umgebogenen und vorzugsweise das Winkelprofil (4) und/oder den Basisabschnitt (11) des Flanschelementes (3) kontaktierenden zweiten Endabschnitt (18) aufweist.

2. Lüftungskanal nach der Anspruch 1, **dadurch gekennzeichnet, dass** die Flanschelemente (3, 3') sowie die Winkelprofile (4, 4') zweier Lüftungskanäle (1, 1') mittels eines vorzugsweise als selbstklebendes Dichtungsband (19) ausgeführten Dichtelementes (19) gegeneinander abgedichtet sind.

3. Lüftungskanal nach Anspruch 2, **dadurch gekennzeichnet, dass** die ersten Endabschnitte (17, 17') der Halteelemente (5, 5') sich in Montagelage zweier Lüftungskanäle (1, 1') flächig kontaktieren und das Dichtungsband (19) bzw. Dichtelement (19) in jenem dem Lüftungskanalquerschnitt (8) benachbarten Bereich der Basisabschnitte (11, 11') der Flanschelemente (3, 3') angeordnet ist, welcher nicht von den ersten Endabschnitten (17, 17') der Halteelemente (5, 5`) kontaktiert wird.

4. Lüftungskanal nach einem der Ansprüche 1 bis 3, **dadurch gekennzeichnet, dass** das Halteelement (5) in Montagelage über annähernd die gesamte Seitenlänge (13) der Seitenwand (2) verläuft.

5. Lüftungskanal nach einem der Ansprüche 1 bis 4, **dadurch gekennzeichnet, dass** das Winkelprofil (4) einen Anschlagabschnitt (15) aufweist, welcher von einem Endbereich (16) des Halteelementes (5) kontaktierbar ist und welcher das Halteelement (5) in Montagelage gegen ein Verschieben am Flanschelement (3) sichert.

6. Lüftungskanal nach einem der Ansprüche 1 bis 5, **dadurch gekennzeichnet, dass** das Halteelement (5) entlang des Längsverlaufs des Flanschelementes (3) auf dieses aufschiebbar ist.

7. Lüftungskanal nach einem der Ansprüche 1 bis 5, **dadurch gekennzeichnet, dass** das Halteelement (5) auf dem Flanschelement (3) und/oder dem Winkelprofil (4) verrastbar ist.

8. Lüftungskanal nach einem der Ansprüche 1 bis 7, **dadurch gekennzeichnet, dass** das Winkelprofil (4) in einem Eckbereich (20) mit einem langlochförmigen Durchbruch (21) zur Aufnahme eines Schraubelementes (6) versehen ist, wobei das Schraubelement vorzugsweise als Torbandschraube ausgeführt ist.
